# EUROPEAN PATENT APPLICATION

(11) **EP 2 157 687 A1**
(43) Date of publication of application: **24.02.2010**
(21) Application number: 08014664.0
(22) Date of filing: 19.08.2008
(51) Int. Cl.: H02P 5/46, H02P 9/02, H02P 9/44

(54) **Generators**

(71) Applicant: Converteam Technology Ltd, Rugby Warwickshire CV21 1BU (GB)
(72) Inventor: Grieve, Derek, William, Leicestershire, LE17 5EG (GB); Crane, Allan, David, Warwickshire, CV230BH (GB)
(74) Representative: Serjeants

(57) **Abstract**

The present invention relates to a generator comprising a plurality of galvanically-isolated multi-phase stator windings (sometimes called poly-phase stator windings). Each stator winding is connected to an independent load such as a power distribution system, for example. A number of galvanically-isolated power distribution islands having different frequencies and voltages may therefore be derived from a single generator.

## Description

### Technical Field

The present invention relates to generators, and in particular to generators having a plurality of multi-phase stator windings.

### Summary of the Invention

The present invention provides a generator comprising a plurality of galvanically-isolated multi-phase stator windings (sometimes called poly-phase stator windings), each stator winding being connected to an independent load.

The line vector current groups for the generator may operate at different voltages, power factors and harmonic distortion phase relationships. Moreover, each line vector current group may continue to operate with a single phase ground fault, or with a single ground fault within its respective power distribution system.

Each stator winding may be connected directly to an independent power distribution system. However, it is also possible for each stator winding to be connected to an independent power distribution system by means of a power converter (typically a static power converter). The power converter may provide controlled or uncontrolled rectifier action or it may provide frequency conversion, for example. In this manner, a number of galvanically-isolated power distribution islands having different frequencies and voltages may be derived from a single generator. A control system will normally be provided for the power converters. An excitation control system for controlling the excitation of the generator may also be provided. These control systems may be fully integrated or they may remain separate.

The generator may further comprise a stator having a plurality of slots for receiving the stator windings. In other words, the stator windings may be layered in the same slots and have inter-layer insulation of sufficient performance to withstand the voltage associated with simultaneous ground faults having the worst case phase relationship. The slots may be formed in the magnetic material which forms the stator magnetic core, or the slots may be formed in a non-magnetic material which is secured to the stator magnetic core.

The stator windings are preferably dispersed about the circumference of the stator and may occupy the same proportion of each slot's depth. Each slot may receive a part of two or more of the plurality of stator windings.

As a result of the extremely low leakage reactance between stator windings that share the same slots, a power converter (typically a static power converter) may be connected to one of the stator windings in order to control the excitation of the generator and the harmonic voltage distortion of that stator winding whilst simultaneously benefiting the quality of the power supply output from the plurality of stator windings.

The plurality of stator windings may be arranged in phase with each other or arranged with a predetermined phase displacement with each other to provide beneficial cancellation of stator current integer harmonic distortion.

A plurality of generators as described above can be synchronised and their excitation can be controlled in such a manner as to permit parallel operation.

In the case where each stator winding is connected to an independent power distribution system by means of a power converter then a plurality of generators can be synchronised and their excitation and their power converters can be controlled in such a manner as to permit parallel operation.

The generator may be of a rotating or linear type and employ any suitable excitation. For example, the generator may be a rotating type having a rotor located radially inside a stator, a rotor located radially outside a stator, a pair of rotors located radially inside and outside a stator (double air gap), or a linear type having a translator. The rotor(s) or translator may have any suitable form of excitation including *inter alia* conventional wound field, high temperature superconducting wound field, conventional permanent magnets, bulk high temperature superconducting magnets, induction and any combination of the above. Moreover, the generator may have any suitable form of construction or topology including *inter alia* salient poles, radial flux and axial flux. The present invention is applicable to single or multiple generators coupled by any suitable means such as gearing or tandem coupling, for example, and driven by single or multiple prime movers of any suitable type.

The generator may have any suitable number of phases, although three phases might be typical. In the latter case, each stator winding would be a three-phase winding.

## Claims

1. A generator comprising a plurality of galvanically-isolated multi-phase stator windings, each stator winding being connected to an independent load.

2. A generator according to claim 1, wherein each stator winding is connected directly to an independent power distribution system.

3. A generator according to claim 1, wherein each stator winding is connected to an independent power distribution system by means of a power converter.

4. A generator according to any preceding claim, further comprising a stator having a plurality of slots for receiving the stator windings.

5. A generator according to claim 4, wherein each slot receives a part of two or more of the plurality of stator windings

6. A generator according to any preceding claim, wherein the plurality of stator windings are arranged in phase with each other.

7. A generator according to any of claims 1 to 5, wherein the plurality of stator windings are arranged with a predetermined phase displacement with each other.

8. A plurality of generators according to any preceding claim, being synchronised and their excitation being controlled in such a manner as to permit parallel operation.

9. A plurality of generators according to claim 3, being synchronised and their excitation and their power converters being controlled in such a manner as to permit parallel operation.
